# EUROPEAN PATENT SPECIFICATION

(11) **EP 2 527 206 B1**
(45) Date of publication and mention of the grant of the patent: **02.04.2014**
(21) Application number: 11004362.7
(22) Date of filing: 27.05.2011
(51) Int. Cl.: B60R 16/04

(54) **Battery console for a vehicle**
Batteriekonsole für ein Fahrzeug
Console de batterie pour véhicule

(43) Date of publication of application: 28.11.2012
(73) Proprietor: Volvo Car Corporation, 40 531 Göteborg (SE)
(72) Inventor: Andersson, Erik, 43364 Sävedalen (SE); Gullman, Magnus, 43655 Hovås (SE); Johansson, Mathias, 42734 Billdal (SE)
(74) Representative: Widahl, Jenny Marie

(56) References cited:
- GB-A- 2 155 236
- US-A- 4 367 572

## Description

### Technical field

Embodiments herein relate to a battery console. In particular they relate to a battery console for a vehicle.

### Background

Earlier assemblies for fixing a battery to a vehicle often have used a rigid clamp or a plastic lid for retaining the battery within a battery console during vehicle travel. Such arrangements will usually have to be dimensioned to withstand considerable forces as the battery will be accelerated during vehicle travel.

Previously known US5823502 relates to a fastening device for a vehicle battery having a shell fixedly received in the vehicle for placing the battery and having a clamping bow which clamps the battery to the shell and extends in a U-shape over the battery. The clamping bow Is constructed as a one-piece U-shaped tension band made of spring steel with suspension hooks formed at the leg ends and a protuberance shaped out In the band web and pointing away from the battery top side. By pressing the protuberance flat, the suspension hooks can be hooked into corresponding suspension members on the shell, and after release of the protuberance, the battery is force-lockingly fixed on the shell by means of the tension band. With respect to its manufacturing, such a tension band made of spring steel requires high expenditures and is therefore expensive.

Documents US 4367572 and GB 2 155 236 also disclose battery consoles for vehicles.

### Summary

The invention is defined as a battery console for a vehicle and a vehicle according to claims 1 and respectively 11.

Embodiments herein aim to provide an improved battery console for a vehicle battery, such as a support battery, which battery console can be produced at low cost, allows for ease of mounting and fixing of a battery, and which battery console minimizes risks associated with mounting and fixing of vehicle batteries.

According to a first aspect this Is provided by a battery console for a vehicle, that comprises: a battery compartment comprising a floor, a rear wall, and respective left and right sidewalls; a clamping member for fixation of a battery to the battery compartment; wherein the clamping member is a bracket having a first and a second bracket leg which are attachable to the battery compartment at a respective first and second end of the bracket such that the first bracket leg extends from the floor upwardly in front of a battery placed in the battery compartment and such that the second bracket leg extends from the top of the first bracket leg towards the rear wall above a battery placed in the battery compartment; and wherein the second bracket leg has at least one elastic protuberance protruding, when attached to the battery compartment, towards the floor such that contact between a top side of a battery placed in the battery compartment and the protuberance Is ensured by the elasticity of the at least one elastic protuberance irrespective of minor differences in height of the battery.

The design of the clamping member or bracket as described above allows for tolerances in the combined assembly: battery console; battery; and bracket, without applying excessive pressure to a top side of a battery placed In the battery compartment whilst eliminating gaps which otherwise could allow a battery placed in the battery compartment to accelerate, e.g. when driving on a rough uneven road, and thereby subject the battery console and/or bracket to excessive forces. Elimination of the possibility of such acceleration makes it possible to reduce the dimensions of the battery console and/or bracket, e.g. to reduce the thickness and thus also weight of the sheet metal used therefore, and to use ordinary steel also for the bracket, ensuring low cost without compromising the safety of the arrangement.

According to a second aspect the battery compartment is provided with at least one integrated mechanical stop for retaining the battery in the battery compartment during high upwardly from the floor directed loads.

According to a third aspect the at least one integrated mechanical stop is embodied as a flange extending at least partially above a top side of a battery placed In the battery compartment,

The provision of at least one integrated mechanical stop, as described for the second and third aspects, provides additional safeguards for ensuring that the battery does not unintentionally leave the battery compartment in case of mechanical failure of the clamping member/bracket or the attachment thereof during operation of the vehicle.

According to a fourth aspect the second bracket leg is attachable to the battery compartment through being suspended by an essentially orthogonal second bracket leg end section in a corresponding suspension opening arranged in the rear wall of the battery compartment.

The suspension arrangement, as described for the fourth aspect, provides for ease of attachment whilst at the same time providing requisite freedom of movement for the second bracket leg end section to support the elasticity of the second bracket leg.

According to a fifth aspect the first bracket leg is attachable to the battery compartment through being secured at an essentially orthogonal first bracket leg end section to an attachment point at the floor of the battery compartment.

According to a sixth aspect the first bracket leg end section Is arranged to be secured to the attachment point at the floor of the battery compartment using either of: a combination of threads provided at the attachment point and a corresponding threaded bolt, or a thread-forming screw, or a bolt and nut combination.

Securing of first bracket leg to the attachment point at the floor of the battery compartment, as described for the fifth and sixth aspects, provides for the absorption of high loads In a z-direction at the bracket whilst at the same time allowing the first bracket leg end section to provide some elasticity in the area of the attachment point whereby an additional tolerance in the height of the battery in a z-direction may be absorbed by the bracket.

According to a seventh aspect the attachment point at the floor of the battery compartment is arranged at a section of the floor of the battery compartment which is raised in relation to a section of the floor of the battery compartment adapted to receive a battery placed in the battery compartment and such that the raised section further serves as a mechanical stop for retaining the battery in the battery compartment during high loads directed out of the battery compartment In a direction orthogonal to the rear wall of the battery compartment.

Raising of the section of the floor of the battery compartment where the attachment point Is arranged, as described for the seventh aspect, also provides for the additional advantage that it provides space for a lower end of a screw or bolt used for attaching the first bracket leg end section to the attachment point at the floor of the battery compartment and thus a reduction of the overall packaging space requirement for the complete battery console assembly as compared to a battery console assembly having a floor lacking such a raised section.

According to an eight aspect the clamping member is constructed as a one-piece bracket made from plate steel.

According to a ninth aspect the first bracket leg comprises at least one stiffening structure.

According to a tenth aspect the second bracket leg comprises at least one stiffening structure adjacent to the respective ends of the second bracket leg and the elastic protuberance provides an intermediate section between the stiffening structures, which intermediate section lacks stiffening structures.

According to an eleventh aspect each stiffening structure Is either of: a pressed In stiffening structure, a stamped stiffening structure, or a stiffening structure created through flanging.

Use of plate steel and stiffening structures, as described for the eighth, ninth, tenth and eleventh aspects, makes the clamping member or bracket more economical as compared to prior art clamping arrangements made from spring steel through ensuring low cost without compromising the safety of the arrangement whilst Intermediate section lacking stiffening structures, as described for the tenth aspect, provides the requisite elasticity.

### Brief description of the drawings

In the following, embodiments herein will be described In greater detail by way of example only with reference to attached drawings, in which
Fig. 1 is a schematic illustration of one embodiment of a battery console in accordance with the present application.
Fig. 2 Is a schematic illustration of one embodiment of a clamping member or bracket of a battery console in accordance with figure 1.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely Intended to conceptually Illustrate the structures and procedures described herein.

### Description of embodiments

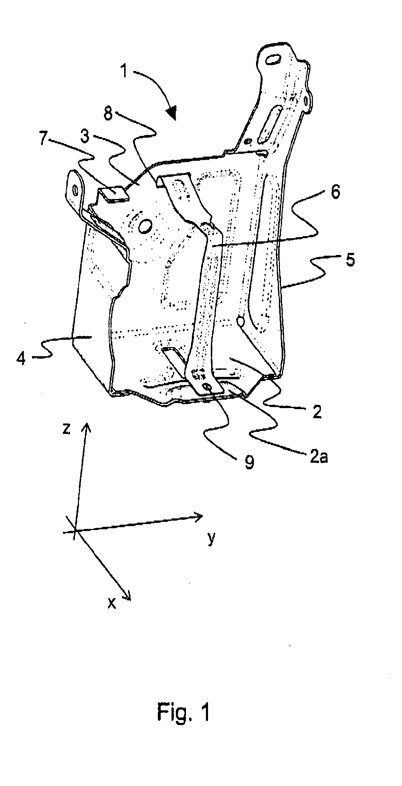

In overview, embodiments herein relate to a battery console 1 for fixing a battery, such as a support battery, to a vehicle. Such a battery console 1 is illustrated in figure 1.

The battery console 1 comprises a battery compartment which comprises a floor 2, a rear wall 3, and respective left 4 and right 5 sidewalls. A clamping member 6 is provided for fixation of a battery to the battery compartment.

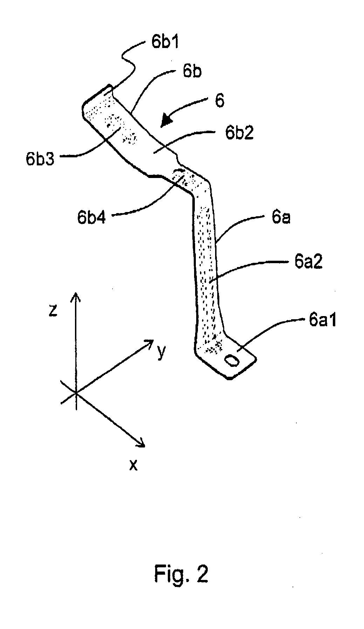

The clamping member, illustrated in isolation in figure 2, Is a bracket 6 having a first 6a and a second 6b bracket leg. The first 6a and the second 6b bracket legs are attachable to the battery compartment at a respective first 6a1 and second 6b1 end of the bracket 6, such that the first bracket leg 6a extends from the floor 2 upwardly, In a z-dlrectlon, In front of a battery placed in the battery compartment and such that the second bracket leg 6b extends from the top of the first bracket leg 6a towards the rear wall 3, essentially In an x-direction, above a battery placed in the battery compartment.

The second bracket leg 6b has at least one elastic protuberance 6b2 protruding, when attached to the battery compartment, towards the floor 2, in a z-direction. Hereby contact between a top side of a battery placed In the battery compartment and the protuberance 6b2 is ensured by the elasticity of the at least one elastic protuberance 6b2 irrespective of minor differences in height of the battery. The clamping member 6, in this way, is adapted to allow for tolerances In the combined assembly: battery console 1; battery; and bracket 6, without applying excessive pressure to a top side of a battery placed In the battery compartment.

In order to provide for this adaptation the bracket 6 is designed with the at least one elastic protuberance 6b2, which may be likened to a spring, and whereby the supporting face of the bracket 6 onto a top side of a battery placed in the battery compartment Increases once the bracket 6 is being attached to the battery compartment. Thus, the bracket will clamp down upon a top side of a battery placed in the battery compartment such that it will always contact the battery irrespective of tolerances. An example of such a tolerance is the height of the battery which may vary, e.g. in the range of ± 3-4mm, in a z-direction, due to the top of a battery normally being welded thereto.

The design of the bracket 6 thus eliminates gaps which otherwise could allow a battery placed in the battery compartment to accelerate, e.g. when driving on a rough uneven road. Elimination of the possibility of such acceleration makes it possible to reduce the dimensions of the bracket 6, e.g. to reduce the thickness and thus also weight of the sheet metal used therefore, and thus the cost thereof, without compromising the safety of the arrangement.

The battery compartment may further be provided with at least one Integrated mechanical stop 7 for retaining the battery In the battery compartment during high upwardly from the floor 2 directed loads. In one embodiment, the at least one Integrated mechanical stop is embodled as a flange 7, protruding from the rear wall 3 in an x-direction and extending at least partially above a top side of a battery placed in the battery compartment. In an alternative embodiment, or if more than one flange 7 is used, It may be envisaged to let the one or more flanges 7 protrude In a y-direction from one or both of the respective left 4 and right 5 sidewalls. It may also be envisaged to combine one or more flanges 7 protruding from the rear wall 3 with one or more flanges 7 protruding from one or both of the respective left 4 and right 5 sidewalls.

The second bracket leg 6b may be attachable to the battery compartment through being suspended by an essentially orthogonal second bracket leg end section 6b1 In a corresponding suspension opening 8 arranged In the rear wall 3 of the battery compartment. The first bracket leg 6a may be attachable to the battery compartment through being secured at an essentially orthogonal first bracket leg end section 6a1 to an attachment point 9 at the floor 2 of the battery compartment. The first bracket leg end section 6a1 may also be arranged to provide some elasticity in the area of the attachment point 9 to the floor 2 of the battery compartment, hereby an additional tolerance in the height of the battery in a z-direction may be absorbed by the bracket 6.

Attachment of the first bracket leg end section 6a1 to the attachment point 9 at the floor 2 of the battery compartment may be facilitated through providing threads thereat for receiving the corresponding threads of a bolt used for attachment. Alternatively a thread-forming screw may be used for attaching the first bracket leg end section 6a1 to the attachment point 9 at the floor 2 of the battery compartment. It is of course also possible to use a standard bolt and nut combination for attaching the first bracket leg end section 6a1 to the attachment point 9 at the floor 2 of the battery compartment.

The attachment point 9 at the floor 2 of the battery compartment may be arranged at a section 2a of the floor 2 of the battery compartment which is raised in relation to a section of the floor of the battery compartment adapted to receive a battery placed in the battery compartment. Hereby the raised section 2a may further serve as a mechanical stop for retaining the battery In the battery compartment during high loads directed out of the battery compartment in a direction orthogonal to the rear wall 3 of the battery compartment. An additional advantage provided by the raised section 2a It that It provides space for a lower end of the screw or bolt used for attaching the first bracket leg end section 6a1 to the attachment point 9 at the floor 2 of the battery compartment. Thus the packaging space requirement for the complete battery console 1 assembly may be reduced as compared to a battery console assembly having a floor lacking such a raised section 2a.

The clamping member according to the invention is constructed as a one-piece bracket 6 made from plate steel, The first bracket leg 6a may further comprise at least one stiffening structure 6a2. The second bracket leg 6b may further comprise at least one stiffening structure 6b3, 6b4 adjacent to the respective ends of the second bracket leg 6b whereby the elastic protuberance 6b2 provides an Intermediate section between the stiffening structures 6b3, 6b4. The intermediate section 6b2 provided by the elastic protuberance, in order to provide the requisite elasticity, hereby lacks stiffening structures. Thus, the second bracket leg 6b may be likened to a double-spring which is slanting slightly upwards as it nears the rear wall 3 of the battery compartment.

Each of the above described stiffening structures 6a2, 6b3, 6b4 may be either of: a pressed in stiffening structure, a stamped stiffening structure, or a stiffening structure created through flanging or other suitable means.

The design of the clamping member or bracket 6 as described above allows use of ordinary steel, which makes the clamping member or bracket more economical as compared to prior art clamping arrangements made from spring steel.

Fastening of a new or replacement battery using the battery console 1 and bracket 6 herein described is easy. Initially the battery is inserted into the battery compartment of the battery console 1 below the retaining flange 7 and placed at the floor 2 thereof. The clamping member or bracket 6 is secured to the rear wall 3 of the battery compartment of the battery console 1 at the second bracket leg end section 6b1, e.g. through the second bracket leg end section 6b1 being Inserted Into a corresponding suspension opening 8, such as a slot of appropriate shape, to which it will be retained by the essentially orthogonal second bracket leg end section 6b1, which forms an upwardly protruding flange. Finally the clamping member or bracket 6 is secured to the floor 2 of the battery compartment of the battery console 1, e.g. through being bolted or screwed thereto at the essentially orthogonal first bracket leg end section 6a1, which forms a flange protruding essentially parallel to the floor 2 of the battery compartment of the battery console 1.

In accordance with the present application is also envisaged a vehicle comprising a battery console 1 as described above.

The above-described embodiments may be varied within the scope of the following claims.

Thus, while there have been shown and described and pointed out fundamental novel features of the embodiments herein, it will be understood that various omissions and substitutions and changes In the form and details of the devices illustrated, and in their operation, may be made by those skilled in the art. For example, it is expressly Intended that all combinations of those elements and/or method steps which perform substantially the same function in substantially the same way to achieve the same results are equivalent. Moreover, It should be recognized that structures and/or elements and/or method steps shown and/or described In connection with any disclosed form or embodiment herein may be incorporated in any other disclosed or described or suggested form or embodiment as a general matter of design choice.

## Claims

1. A battery console (1) for a vehicle comprising:
a battery compartment comprising a floor (2), a rear wall (3), and respective left (4) and right (5) sidewalls;
a clamping member (6) for fixation of a battery to the battery compartment;
wherein the clamping member is having a first (6a) and a second (6b) bracket leg which are attachable to the battery compartment at a respective first (6a1) and second (6b1) end of the bracket (6) such that the first bracket leg (6a) extends from the floor (2) upwardly in front of a battery placed in the battery compartment and such that the second bracket leg (6b) extends from the top of the first bracket leg (6a) towards the rear wall (3) above a battery placed in the battery compartment **characterised in that**
the second bracket leg (6b) has at least one elastic protuberance (6b2) protruding, when attached to the battery compartment, towards the floor (2) such that contact between a top side of a battery placed in the battery compartment and the protuberance (6b2) is ensured by the elasticity of the at least one elastic protuberance (6b2) irrespective of minor differences in height of the battery, and **in that** the clamping member is a one piece bracket (6) made from plate steel.

2. A battery console (1) according to claim 1, **characterized in that** the battery compartment is provided with at least one integrated mechanical stop (7) for retaining the battery in the battery compartment during high upwardly from the floor (2) directed loads.

3. A battery console (1) according to claim 2, **characterized in that** the at least one integrated mechanical stop is embodied as a flange (7) extending at least partially above a top side of a battery placed in the battery compartment.

4. A battery console (1) according to any one of claims 1 to 3, **characterized in that** the second bracket leg (6b) is attachable to the battery compartment through being suspended by an essentially orthogonal second bracket leg end section (6b1) in a corresponding suspension opening (8) arranged in the rear wall (3) of the battery compartment.

5. A battery console (1) according to any one of claims 1 to 4, **characterized in that** the first bracket leg (6a) is attachable to the battery compartment through being secured at an essentially orthogonal first bracket leg end section (6a1) to an attachment point (9) at the floor (2) of the battery compartment.

6. A battery console (1) according to claim 5, **characterized in that** the first bracket leg end section (6a1) is arranged to be secured to the attachment point (9) at the floor (2) of the battery compartment using either of: a combination of threads provided at the attachment point (9) and a corresponding threaded bolt, or a thread-forming screw, or a bolt and nut combination.

7. A battery console (1) according to any one of claims 5 to 6, **characterized in that** the attachment point (9) at the floor (2) of the battery compartment is arranged at a section (2a) of the floor (2) of the battery compartment which is raised in relation to a section of the floor of the battery compartment adapted to receive a battery placed in the battery compartment and such that the raised section (2a) further serves as a mechanical stop for retaining the battery in the battery compartment during high loads directed out of the battery compartment in a direction orthogonal to the rear wall (3) of the battery compartment.

8. A battery console (1) according to any one of claims 1 to 7, **characterized in that** the first bracket leg (6a) comprises at least one stiffening structure (6a2).

9. A battery console (1) according to any one of claims 1 to 8, **characterized in that** the second bracket leg (6b) comprises at least one stiffening structure (6b3, 6b4) adjacent to the respective ends of the second bracket leg (6b) and the elastic protuberance (6b2) provides an intermediate section between the stiffening structures (6b3, 6b4), which intermediate section (6b2) lacks stiffening structures.

10. A battery console (1) according to claim 9, **characterized in that** each stiffening structure (6a2, 6b3, 6b4) is either of: a pressed in stiffening structure, a stamped stiffening structure, or a stiffening structure created through flanging.

11. A vehicle **characterized in that** it comprises a battery console (1) according to any one of claims 1 to 10.

## Patentansprüche

1. Batteriekonsole (1) für ein Fahrzeug, umfassend:
ein Batteriefach mit einem Boden (2), einer Rückwand (3) und einer linken (4) bzw. rechten (5) Seitenwand;
ein Klemmglied (6) zur Befestigung einer Batterie an dem Batteriefach;
wobei das Klemmglied einen ersten (6a) und einen zweiten (6b) Halterarm aufweist, die an einem ersten (6a1) bzw. zweiten (6b1) Ende des Halters (6) an dem Batteriefach befestigt werden können, so dass sich der erste Halterarm (6a) vom Boden (2) nach oben vor einer in dem Batteriefach platzierten Batterie erstreckt und so dass sich der zweite Halterarm (6b) vom oberen Ende des ersten Halterarms (6a) zur Rückwand (3) über einer in dem Batteriefach platzierten Batterie erstreckt,
**dadurch gekennzeichnet, dass** der zweite Halterarm (6b) mindestens einen elastischen Vorsprung (6b2) aufweist, der bei Befestigung an dem Batteriefach zum Boden (2) weist, so dass Kontakt zwischen einer Oberseite einer in dem Batteriefach platzierten Batterie und dem Vorsprung (6b2) unabhängig von geringfügigen Höhenunterschieden der Batterie durch die Elastizität des mindestens einen elastischen Vorsprungs (6b2) gewährleistet wird und dass das Klemmglied ein einstückiger Halter (6) ist, der aus Stahlblech hergestellt ist.

2. Batteriekonsole (1) nach Anspruch 1, **dadurch gekennzeichnet, dass** das Batteriefach mit mindestens einem integrierten mechanischen Anschlag (7) zum Festhalten der Batterie in dem Batteriefach bei hohen, vom Boden (2) nach oben gerichteten Lasten versehen ist.

3. Batteriekonsole (1) nach Anspruch 2, **dadurch gekennzeichnet, dass** der mindestens eine integrierte mechanische Anschlag als ein Flansch (7) ausgestaltet ist, der sich zumindest teilweise über einer Oberseite einer in dem Batteriefach platzierten Batterie erstreckt.

4. Batteriekonsole (1) nach einem der Ansprüche 1 bis 3, **dadurch gekennzeichnet, dass** der zweite Halterarm (6b) dadurch an dem Batteriefach befestigt werden kann, dass er durch einen im Wesentlichen orthogonalen zweiten Halterarmendabschnitt (6b1) in einer entsprechenden in der Rückwand (3) des Batteriefachs ausgebildeten Aufhängungsöffnung (8) aufgehängt wird.

5. Batteriekonsole (1) nach einem der Ansprüche 1 bis 4, **dadurch gekennzeichnet, dass** der erste Halterarm (6a) dadurch an dem Batteriefach befestigt werden kann, dass er an einem im Wesentlichen orthogonalen ersten Halterarmendabschnitt (6a1) an einem Befestigungspunkt (9) am Boden (2) des Batteriefachs befestigt wird.

6. Batteriekonsole (1) nach Anspruch 5, **dadurch gekennzeichnet, dass** der erste Halterarmendabschnitt (6a1) zur Befestigung an dem Befestigungspunkt (9) am Boden (2) des Batteriefachs unter Verwendung entweder einer Kombination aus einem am Befestigungspunkt (9) vorgesehenen Gewinde und einem entsprechenden Gewindebolzen oder einer Gewindeschneidschraube oder einer Schrauben- und Mutter-Kombination angeordnet ist.

7. Batteriekonsole (1) nach einem der Ansprüche 5 bis 6, **dadurch gekennzeichnet, dass** der Befestigungspunkt (9) am Boden (2) des Batteriefachs in einem Abschnitt (2a) des Bodens (2) des Batteriefachs angeordnet ist, der bezüglich eines Abschnitts des Bodens des Batteriefachs, der zur Aufnahme einer in dem Batteriefach platzierten Batterie ausgeführt ist, erhaben ist, und derart, dass der erhabene Abschnitt (2a) ferner als ein mechanischer Anschlag zum Festhalten der Batterie in dem Batteriefach unter hohen Lasten, die in einer orthogonal zur Rückwand (3) des Batteriefachs verlaufenden Richtung aus dem Batteriefach heraus gerichtet sind, dient.

8. Batteriekonsole (1) nach einem der Ansprüche 1 bis 7, **dadurch gekennzeichnet, dass** der erste Halterarm (6a) mindestens eine Versteifungsstruktur (6a2) umfasst.

9. Batteriekonsole (1) nach einem der Ansprüche 1 bis 8, **dadurch gekennzeichnet, dass** der zweite Halterarm (6b) mindestens eine Versteifungsstruktur (6b3, 6b4) neben den jeweiligen Enden des zweiten Halterarms (6b) umfasst und der elastische Vorsprung (6b2) einen Zwischenabschnitt zwischen den Versteifungsstrukturen (6b3, 6b4) bereitstellt, wobei der Zwischenabschnitt (6b2) keine Versteifungsstrukturen aufweist.

10. Batteriekonsole (1) nach Anspruch 9, **dadurch gekennzeichnet, dass** jede Versteifungsstruktur (6a2, 6b3, 6b4) entweder eine eingepresste Versteifungsstruktur, eine gestanzte Versteifungsstruktur oder eine durch Bördeln hergestellte Versteifungsstruktur ist.

11. Fahrzeug, **dadurch gekennzeichnet, dass** es eine Batteriekonsole (1) nach einem der Ansprüche 1 bis 10 umfasst.

## Revendications

1. Console de batterie (1) pour un véhicule, comprenant :
un compartiment de batterie comprenant un fond (2), une paroi arrière (3) et des parois latérales respectives gauche (4) et droite (5) ;
un organe de serrage (6) pour la fixation d'une batterie au compartiment de batterie ;
l'organe de serrage comprenant une première branche de console (6a) et une seconde branche de console (6b) qui peuvent être attachées au compartiment de batterie au niveau d'une première (6a1) et d'une seconde (6b1) extrémité respective de la console (6) de telle sorte que la première branche de console (6a) s'étende depuis le fond (2) vers le haut devant une batterie placée dans le compartiment de batterie et de telle sorte que la seconde branche de console (6b) s'étende depuis le haut de la première branche de console (6a) vers la paroi arrière (3) au-dessus d'une batterie placée dans le compartiment de batterie,
**caractérisée en ce que** la seconde branche de console (6b) présente au moins une protubérance élastique (6b2) qui, lorsqu'elle est attachée au compartiment de batterie, fait saillie vers le fond (2) de telle sorte qu'un contact entre un côté supérieur d'une batterie placée dans le compartiment de batterie et la protubérance (6b2) soit assuré par l'élasticité de l'au moins une protubérance élastique (6b2) indépendamment de différences mineures de hauteur de la batterie, et **en ce que** l'organe de serrage est une console d'une seule pièce (6) fabriquée en tôle d'acier.

2. Console de batterie (1) selon la revendication 1, **caractérisée en ce que** le compartiment de batterie est pourvu d'au moins une butée mécanique intégrée (7) pour retenir la batterie dans le compartiment de batterie en cas de fortes charges dirigées vers le haut depuis le fond (2).

3. Console de batterie (1) selon la revendication 2, **caractérisée en ce que** l'au moins une butée mécanique intégrée est mise en oeuvre sous forme de bride (7) s'étendant au moins en partie au-dessus d'un côté supérieur d'une batterie placée dans le compartiment de batterie.

4. Console de batterie (1) selon l'une quelconque des revendications 1 à 3, **caractérisée en ce que** la seconde branche de console (6b) peut être attachée au compartiment de batterie en étant suspendue par une section d'extrémité de seconde branche de console essentiellement perpendiculaire (6b1) dans une ouverture de suspension correspondante (8) réalisée dans la paroi arrière (3) du compartiment de batterie.

5. Console de batterie (1) selon l'une quelconque des revendications 1 à 4, **caractérisée en ce que** la première branche de console (6a) peut être attachée au compartiment de batterie en étant fixée au niveau d'une section d'extrémité de première branche de console essentiellement perpendiculaire (6a1) à un point d'attache (9) au fond (2) du compartiment de batterie.

6. Console de batterie (1) selon la revendication 5, **caractérisée en ce que** la section d'extrémité de première branche de console (6a1) est agencée de manière à être fixée au point d'attache (9) au fond (2) du compartiment de batterie en utilisant : une combinaison de filetages prévus au niveau du point d'attache (9) et d'un boulon fileté correspondant, ou une vis autotaraudeuse ou une combinaison de boulon et d'écrou.

7. Console de batterie (1) selon la revendication 5 ou 6, **caractérisée en ce que** le point d'attache (9) au fond (2) du compartiment de batterie est agencé au niveau d'une section (2a) du fond (2) du compartiment de batterie qui est rehaussée par rapport à une section du fond du compartiment de batterie prévue pour recevoir une batterie placée dans le compartiment de batterie et de telle sorte que la section rehaussée (2a) serve en outre de butée mécanique pour retenir la batterie dans le compartiment de batterie en cas de fortes charges orientées hors du compartiment de batterie dans une direction perpendiculaire à la paroi arrière (3) du compartiment de batterie.

8. Console de batterie (1) selon l'une quelconque des revendications 1 à 7, **caractérisée en ce que** la première branche de console (6a) comprend au moins une structure raidisseuse (6a2).

9. Console de batterie (1) selon l'une quelconque des revendications 1 à 8, **caractérisée en ce que** la seconde branche de console (6b) comprend au moins une structure raidisseuse (6b3, 6b4) adjacente aux extrémités respectives de la seconde branche de console (6b) et la protubérance élastique (6b2) fournit une section intermédiaire entre les structures raidisseuses (6b3, 6b4), laquelle section intermédiaire (6b2) ne présente pas de structure raidisseuse.

10. Console de batterie (1) selon la revendication 9, **caractérisée en ce que** chaque structure raidisseuse (6a2, 6b3, 6b4) est : une structure raidisseuse enfoncée par pressage, une structure raidisseuse matricée, ou une structure raidisseuse créée par bridage.

11. Véhicule **caractérisé en ce qu'**il comprend une console de batterie (1) selon l'une quelconque des revendications 1 à 10.
